# EUROPEAN PATENT SPECIFICATION

(11) **EP 3 992 626 B1**
(45) Date of publication and mention of the grant of the patent: **25.09.2024**
(21) Application number: 20204158.8
(22) Date of filing: 27.10.2020
(51) Int. Cl.: G01N 30/32, G06F 30/27, G01N 30/86

(54) **TRAINING A NEURAL NETWORK PROCESSOR FOR DIAGNOSIS OF A CONTROLLED LIQUID CHROMATOGRAPHY PUMP UNIT**
TRAINING EINES PROZESSORS MIT NEURONALEM NETZ ZUR DIAGNOSE EINER GESTEUERTEN FLÜSSIGKEITSCHROMATOGRAFIEPUMPENEINHEIT
FORMATION D'UN PROCESSEUR DE RÉSEAU NEURONAL POUR LE DIAGNOSTIC D'UNE UNITÉ DE POMPE DE CHROMATOGRAPHIE LIQUIDE CONTRÔLÉE

(43) Date of publication of application: 04.05.2022
(73) Proprietor: Spark Holland B.V., 7812 HZ Emmen (NL)
(72) Inventor: VISSER, Jan, 7812 HZ Emmen (NL); VAN GOOR, Richard Charles, 7812 HZ Emmen (NL); WEUSTINK, Paul Bernard Theo, 7521 AN Enschede (NL)
(74) Representative: V.O.

(56) References cited:
- EP-A1- 0 777 887
- WO-A1-2020/214075
- CN-A- 107 272 644
- US-A1- 2019 287 005

## Description

The present disclosure pertains to a method of training a neural network processor for providing diagnostic information of a controlled liquid chromatography pump unit.

The present disclosure further pertains to a method of manufacturing a controlled liquid chromatography pump unit having an auto-diagnostic facility.

The present disclosure still further pertains to a method of using a controlled liquid chromatography pump unit having an auto-diagnostic facility.

The present disclosure still further pertains to a method of manufacturing a system comprising a controlled liquid chromatography pump unit and a diagnostic unit.

The present disclosure still further pertains to a method of using a system comprising a controlled liquid chromatography pump unit and a diagnostic unit.

Liquid chromatography is an analytical method that takes advantage of the difference in affinity of substances with both a mobile and a stationary phase. The mobile phase in liquid chromatography consist of a fluid carrying various substances. The stationary phase is a column of porous material, through which the fluid is driven at high pressure. Liquid chromatography is widely used in hospitals, universities and various industries, both for analytical and for production applications. An example of the use of liquid chromatography is the demonstration of doping use in sports. In order to demonstrate the presence of the doping agent among the variety of substances excreted in the urine by the body, the doping agent, which has its own molecular characteristics, must be separated from the other substances. This is done using chromatographic techniques. Because each substance has its own 'adhesion force' to the stationary phase, they are carried along with the mobile phase faster or slower. In this way the doping agent is separated from the other substances.

For a proper performance of the method it is mandatory that the pump delivers the mobile phase at a highly accurate and precise flow rate to the column, to avoid undesired variations in the retention time. In a typical liquid chromatography pump unit this is accomplished by using two mutually cooperating pistons. The liquid chromatography pump unit comprises a controller that drives a pair of motors such that when the first one of the pistons presses the fluid into the column, the other one of the pistons sucks fluid from the reservoir. Therewith a stable pressure and flow rate can be achieved, provided that no pump faults occur. Nevertheless, even minor defects of the pump may cause deviations and/or variations in pressure and/or flow rate that render the liquid chromatography unreliable. It is often difficult to identify the cause of the deviations and/or variations. Accordingly, there is a need to facilitate a diagnosis, so that the pump can be promptly serviced and/or repaired to mitigate out-times of the apparatus.

EP-0777887 discloses a method of diagnosing a controlled liquid chromatography pump unit by means of a processor which uses artificial intelligence or fuzzy logic for analysing sensor signals indicative of the pump unit state.

Each of US-2019/287005 and CN-107272644 discloses a method of training a neural network for providing diagnostic information of an oil pump, on the basis of a simulation model.

### SUMMARY

It is an object of the present disclosure to provide means that enable a more efficient diagnosis of a controlled liquid chromatography pump unit.

According to the first aspect of the present disclosure, a method of training a neural network processor for providing diagnostic information of a controlled liquid chromatography pump unit is provided as specified in claim 1.

A method of manufacturing a controlled liquid chromatography pump unit having an auto-diagnostic facility is provided in dependent claim 3. For example a diagnostic facility is part of the controlled liquid chromatography pump unit. The auto-diagnostic facility may be activated by a control input from the operator, or may be activated automatically, for example upon startup or regularly, e.g. after every 100 hours of operation.

The controlled liquid chromatography pump for providing a controlled supply of a fluid retrieved from an inlet to an outlet, comprises a pump controller, at least one sensor and a trained neural network processor. The pump controller has control outputs connected to the liquid chromatography pump for providing control signals to the liquid chromatography pump in accordance with a pump controller state.

The pump controller drives the pump in a periodic manner, by periodically repeating a driving signal pattern. The pump controller may provide an output signal indicative for its operation state, also denoted as pump controller state signal. In an embodiment the pump controller state signal indicates that the pump controller is in a phase i/n of the driving period, wherein the driving period is partitioned into n portions (e.g. 32 portions) and i is an integer in the range of 1 to n. The pump controller state signal may for example be updated at the onset of every 1/n-th portion of the driving period. Additionally or alternatively, in case the pump controller operates according to a state sequence, the pump controller state signal may for each point in time indicate the specific state of the state sequence assumed by the pump controller at that point in time.

At least one sensor comprises a sensor output for providing a sense signal indicative for an operational characteristic of the pump. The trained neural network processor is connected to the sensor output of the at least one sensor and to at least one control outputs of the pump controller to receive one or more signals indicative for said pump controller state and to provide in response thereto a diagnostic output signal. In an embodiment the pump unit has a first pump section and a second pump section, each having a respective pressure chamber with a piston driven by a respective motor in response to the control signals of the pump controller. The at least one sensor may comprise sensors for measuring a pressure prevailing in several positions in a fluid channel defined by the pump and sensors for providing an indication of the piston positions, e.g. provided as encoders coupled to the pump motor. Also flow sensors may be contemplated. However, flow sensors are preferably omitted to keep costs at a modest level. The trained neural network processor is connected to the outputs of these sensors. Moreover, the trained neural network processor is connected to one or more outputs of the pump controller, e.g. the control outputs to receive signals indicative for the supplied one or more pump control signals. Alternatively or additionally it may be connected to outputs of the pump controller to receive one or more signals indicative for the pump controller state. It has been found that in this way a suitably trained neural network processor is capable to provide a proper diagnostic output signal which facilitates the detection of various pump faults that may in practice occur, such as a primary seal leakage, a secondary seal leakage, an inlet check valve leakage, an outlet check valve leakage, a flow path blockage, a pressure deviation and a pressure ripple.

Alternatively, or additionally the one or more diagnostic output signals may be indicative for a need of maintenance to avoid an expected occurrence of a pump fault in the (near) future. In this way it can be avoided that the pump fault actually does occur by a timely maintenance. The pump can continue to function within specifications and its operation has to be interrupted only during the execution of the maintenance. Therewith the duration of the non-operational state is reduced as compared to the situation that only the actual occurrence of a fault is signaled. On that case the duration of the non-operational state is not only determined by the maintenance time, but also includes the waiting time between the moment that the fault is detected and the moment that the maintenance operator has arrived.

The controlled liquid chromatography pump unit may comprise a unidirectional fluent path between said inlet and said outlet, a first fluent path section therein being defined between a first unidirectional valve and a second unidirectional valve and a second fluent path section therein being defined between the second unidirectional valve and the outlet. Therein a first piston pump with a first pump chamber communicates with the first fluent path section and a second piston pump with a second pump chamber communicates with the second fluent path section. The control signals of the pump controller are to drive the first and the second piston pump so that they mutually cooperate to maintain a constant flow. In an exemplary configuration the first and the second piston pump provide for a mutually parallel fluid paths from a common inlet to a common outlet. In this example the pumps operate in counter phase. I.e. when a first one of the pistons presses the fluid into the column, the other one of the pistons sucks fluid from the reservoir. In another exemplary configuration the first and the second piston pump are arranged in series. In this case the operation of the first and the second piston pump is not necessarily in counterphase during a full operational cycle. For example, while the second pump supplies the fluid from its chamber to the outlet, the first pump may first suck the fluid from the inlet, and pressurize the fluid already before the second pump has finished supplying.

The controlled liquid chromatography pump unit may further comprise a n-ary pump section with an n-ary pump having n inputs and a single output coupled to the inlet of the unidirectional fluent path. The value n is an integer greater or equal than 2, for example four. Therewith the fluid can be provided with a plurality of solvents.

In an embodiment of the controlled liquid chromatography pump unit the trained neural network processor comprises a Multilayer Perceptron (MLP) cooperating with a feature extraction component that preprocesses the combination of input signals. The preprocessed input signals for example comprise a minimum value, a maximum value, and a mean value of each of the original input signals.

In another embodiment of the controlled liquid chromatography pump unit the trained neural network processor comprises a combination of a set of Convolutional Neural Networks (CNN) and a pair of Long Short-Term Memory (LSTM) layers. The presence of the CNNs obviate the use of a separate feature extraction and contrary to standard region based neural networks (RNNs), LSTMs are capable of learning long-term dependencies.

Dependent claim 5 specifies a method of manufacturing a system that comprises a controlled liquid chromatography pump unit and a diagnostic unit. The controlled liquid chromatography pump unit manufactured therewith comprises a liquid chromatography pump, a pump controller, at least one sensor, and a pump interface. The pump controller of the pump unit in this system has control outputs connected to the liquid chromatography pump for providing control signals to the liquid chromatography pump in accordance with a pump controller state. The at least one sensor comprises a sensor output for providing a sense signal indicative for an operational characteristic of the pump. The pump interface is coupled to at least one sensor to receive said sensor output and is coupled to the pump controller to receive a combination of input signals that comprise the drive signals for driving the pump sections and one or more signals that are indicative for the pump controller state.

In the system manufactured with the method of claim 5, the diagnostic unit comprises a trained neural network and a diagnostic unit interface. The diagnostic unit interface is configured to be communicatively coupled to the pump interface to enable the trained neural network processor to provide a diagnostic output indicative for a state of the controlled liquid chromatography pump unit on the basis of the combination of input signals.

Hence, in this system, the trained neural network processor is not part of the controlled liquid chromatography pump unit but is part of a separate diagnostic unit. Therewith a single trained neural network processor can be used for diagnosing a plurality of controlled liquid chromatography pump units. I.e. a diagnostic unit may be used in a maintenance department of a research institute for periodically checking the controlled liquid chromatography pump units of said institute, or for diagnosing on a case to case basis. The diagnostic unit may be coupled with its diagnostic unit interface to the pump interface by a wired connection, e.g. by directly engaging a diagnostic unit interface connector with a pump interface connector. Either one or both of the connectors may include a cable. Alternatively, communication between the pump interface and the diagnostic unit interface may take place via a wireless connection. The connection whether wired or wireless may be private or public, e.g. a local network or a public network. In some systems the diagnostic unit is used by a service provider that remotely performs the diagnosis for various clients, e.g. on regular basis or on a case to case basis. It is noted that the communication will mainly involve a transfer of the signals received by the pump interface from the pump controller and the at least one sensor, but typically the communication will also involve a transfer of signals from the diagnostic unit to the pump interface.

In some systems, the pump interface is configured to record one or more control signals of the pump controller and the sense signal of the at least one sensor during a period of time and transfers said recorded signals to the diagnostic unit interface.

It is noted that the controlled liquid chromatography pump unit as used in the system may be one of various embodiments, for example as described for the version of the controlled liquid chromatography pump unit with auto-diagnostic capability it may have two controlled pump sections. Also a n-ary input pump section may be comprised as described above.

Furthermore, various options are available for the diagnostic unit. In an exemplary embodiment thereof, the trained neural network processor comprises a Multilayer Perceptron (MLP) cooperating with a feature extraction component that preprocesses the combination of input signals. The preprocessed input signals for example comprise a minimum value, a maximum value, and a mean value of each of the original input signals. In another embodiment thereof, the trained neural network processor comprises a combination of a set of Convolutional Neural Networks (CNN) and a pair of Long Short-Term Memory (LSTM) layers.

Independent claim 1 specifies a method of training a neural network processor for providing diagnostic information of a controlled liquid chromatography pump unit. The trained neural network processor obtained with this method is suitable for manufacturing the controlled liquid chromatography pump unit with auto-diagnostic facility, as well as for manufacturing the system that comprises a controlled liquid chromatography pump unit and a diagnostic unit.

The method as claimed in claim 1 comprises an execution of the following sequence of steps:
a) simulating a pump controller generating one or more pump control signals in accordance with a pump controller state;
b) simulating a pump fault simulation signal representative for the presence or absence of a pump fault;
c) executing a simulation model of a pump unit, the simulation model providing one or more simulated sensor signals representing operational parameters of the simulated pump unit in response to the one or more simulated pump control signals, the simulation model selectively simulating a pump fault in response to the pump fault simulation signal;
d) supplying the neural network processor with a combination of input signals comprising the one or more simulated sensor signals and one or more signals indicative for said pump controller state and/or indicative for the supplied one or more simulated pump control signals;
e) the neural network processor computing one or more output signals in response to the supplied combination of input signals;
f) computing a loss function by comparison of a diagnostic state as indicated by the one or more output signals and a diagnostic state as indicated by the pump fault simulation signal;
g) training the neural network processor by feeding back a loss computed with the loss function;
wherein during one or more executed sequences the pump fault simulation signal indicates that a predetermined pump fault is to be simulated and during one or more executed sequences the pump fault simulation signal indicates that the predetermined pump fault is to be absent in the simulation.

Typically the neural network processor is trained to recognize a plurality of pump faults, such as the pump faults referred to above, e.g. a primary seal leakage, a secondary seal leakage, an inlet check valve leakage, an outlet check valve leakage, a flow path blockage, a pressure deviation and a pressure ripple. For each of the pump faults for which the neural network processor is to be trained, the simulation model is configured by the pump fault simulation signal to simulate an operation of the pump unit with that pump fault and is configured to provide one or more simulated sensor signals representing operational parameters of the simulated pump unit with that pump fault. During the training the neural network processor is provided with a combination of input signals comprising the one or more simulated sensor signals as well as one or more signals indicative for said pump controller state and/or indicative for the supplied one or more simulated pump control signals. In response to the supplied combination of input signals, the neural network processor computes one or more output signals that represent an estimated diagnostic state. For example, each output may be indicative for a particular pump fault. Subsequently a loss function is computed by comparison of an estimated diagnostic state as indicated by the one or more output signals and a diagnostic state as indicated by the pump fault simulation signal. Then the neural network processor is trained by feeding back a loss computed with the loss function. One option to perform feeding back is by back propagation. Typically, for each type of pump fault, as well as for the case that there is no pump fault the sequence of steps is repeated to improve the quality of the estimated diagnostic state. Noise may be introduced in one or more signals of the combination of input signals supplied to the neural network processor for a more robust training. Also the neural network processor may be trained to recognize a plurality of pump faults.

### BRIEF DESCRIPTION OF THE DRAWINGS

These and other aspects are described in more detail with reference to the drawing. Therein:
FIG. 1 schematically shows a first controlled liquid chromatography pump unit having an auto-diagnostic facility;
FIG. 2 shows various examples of pump faults that may result in a malfunctioning;
FIG. 3 shows a first system comprising a controlled liquid chromatography pump unit and a diagnostic unit;
FIG. 4 shows an alternative system comprising a controlled liquid chromatography pump unit and a diagnostic unit;
FIG. 5 shows aspects of an alternative pump unit;
FIG. 6,7A, 7B and 7C schematically show embodiments of a method of training a neural network processor for providing diagnostic information of a controlled liquid chromatography pump unit; therein FIG. 6 shows the method as a sequence of steps to be executed and FIG. 7A, 7B and 7C cluster wise represent these steps for three embodiments;
FIG. 8A shows an exemplary neural network processor module as employed in FIG. 7A, 7B, 7C in more detail;
FIG. 8B shows the exemplary neural network processor module upon completion of the training procedure;
FIG. 9 shows a first example of a neural network processor that can be trained for use in a controlled liquid chromatography pump unit having an auto-diagnostic facility or in a separate diagnostic unit;
FIG. 9A shows in more detail a component in the exemplary neural network processor of FIG. 9;
FIG. 10 shows a second example of a neural network processor that can be trained for use in a controlled liquid chromatography pump unit having an auto-diagnostic facility or in a separate diagnostic unit;
FIG. 10A shows a component of the exemplary neural network processor of FIG. 10 in more detail.

### DETAILED DESCRIPTION OF EMBODIMENTS

Like reference symbols in the various drawings indicate like elements unless otherwise indicated.

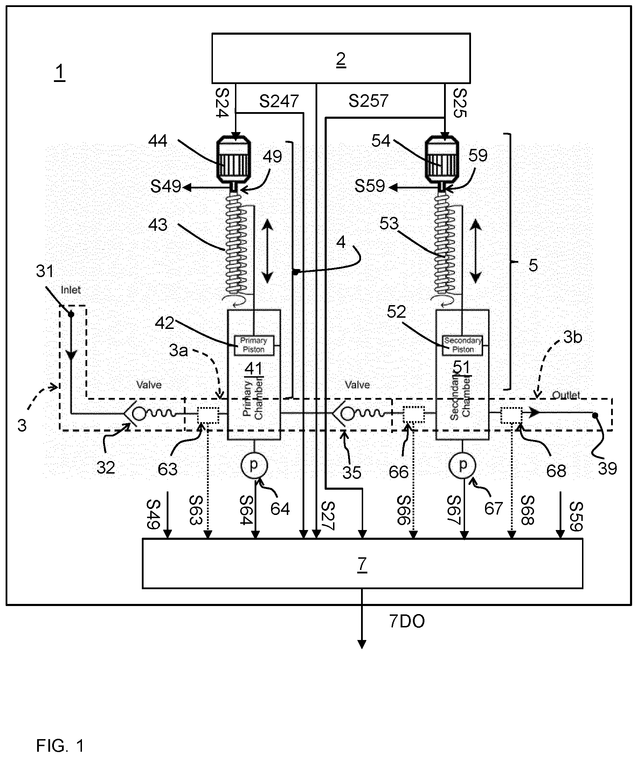

FIG. 1 schematically shows a first controlled liquid chromatography pump unit 1 having an auto-diagnostic facility. In the embodiment shown, the pump unit 1 comprises a first and a second controlled pump section 4,5. The first pump section 4 comprises a first pressure chamber 41 with a first piston 42 driven upwards and downwards by a first motor 44 via a first spindle transmission 43. Similarly, the second pump section 5 comprises a second pressure chamber 51 with a second piston 52 driven upwards and downwards by a second motor 54 via a second spindle transmission 53. A unidirectional fluid path 3 is provided having an inlet 31 and an outlet 39. The unidirectional fluid path 3 has a first fluid path section 3a between a first unidirectional valve 32 and a second unidirectional valve 35 and a second fluid path section 3b between the second unidirectional valve 35 and the outlet 39. The first pump section 4 is connected with the first fluid path section 3a and the second pump section 5 is connected with the second fluid path section 3b. The pump unit 1 further comprises a pump controller 2 that in operation provides drive signals S24, S25 for driving the first and the second pump section 4,5 in accordance with a controller state. The controlled liquid chromatography pump unit 1 comprises one or more sensors 49, 59, 64, 67 for sensing operational characteristics of the pump unit 1. In the embodiment shown these comprise a first encoder 49 to issue a signal S49 indicative for the position of the first piston 42 and second encoder 59 to issue a signal S59 indicative for the position of the second piston 52 The one or more sensors furthermore comprise a first pressure sensor 64 to issue a sense signal S64 indicative for a fluid pressure in the first fluid path section 3a and a second pressure sensor 67 to issue a sense signal S67 indicative for a fluid pressure in the second fluent path section 3b. As indicated by dashed lines, in some embodiments the controlled liquid chromatography pump unit 1 may comprise one or more flow sensors, for example a first flow sensor 63, configured to issue a sense signal S63 indicative for a flow in the first fluent path section 3a, a second flow sensor 66 to issue a sense signal S66 indicative for a flow through the fluent path from the first pump section 4 to the second pump section 5 and a third flow sensor 68, configured to issue a sense signal S68 indicative for a flow in the second fluent path section 3b. Although flow sensors may provide a valuable indication about the state of the pump, these are preferably avoided to avoid a substantial increase in costs.

In general the pump controller 2, will use one or more sensors 63, 64, 66, 67, 68 to calculate the drive signals S24, S25. However, the exact operation of the pump controller is not the subject of this disclosure and therefore the sensory inputs of the controller are omitted.

The controlled liquid chromatography pump unit 1 of FIG. 1 has an auto-diagnostic facility in that it comprises a trained neural network processor 7 having inputs connected to outputs of one or more sensors and to one or more outputs of the pump controller 2. In the embodiment shown, the trained neural network processor 7 has inputs to receive the sense signals S63, S64, S66, S67 and S68 of the sensors 63, 64, 66, 67 and 68 respectively. Also the trained neural network processor 7 has inputs coupled to outputs of the pump controller 2. In this embodiment it receives output signals S247, S257, indicative for the drive signals S24, S25 with which the first and the second pump motor 44, 54 are driven respectively. Furthermore it receives an output signal S27 of the pump controller 2 indicative for the pump controller state. In other embodiments the output signals received by the trained neural network processor 7 from the pump controller 2 may comprise only the output signals S247, S257 indicative for the drive signals S24, S25 or alternatively, may comprise only an output signal S27 of the pump controller 2 indicative for the pump controller state.

In operation of the controlled liquid chromatography pump unit 1, the pump controller 2 drives the two pistons 42, 52. When one piston presses the fluid into the column, the other piston sucks fluid from the reservoir. In normal circumstances, therewith a desired flow rate can be accurately and precisely maintained, which is essential for a performing a proper chromatography measurement. Various circumstances however may in practice prevent the controlled liquid chromatography pump unit 1 from a proper operation.

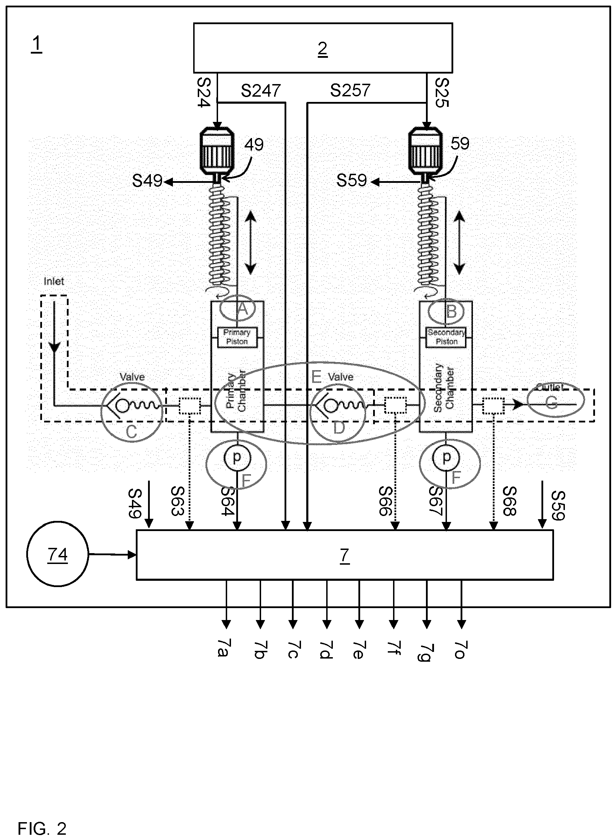

As illustrated in FIG. 2, frequently occurring issues are e.g. a primary seal leakage A, a secondary seal leakage B, an inlet check valve leakage C, an outlet check valve leakage D, a flow path blockage E, a pressure deviation F and a pressure ripple G. In case of a primary seal leakage A, a leakage occurs between first piston 42 and a seal at the inner wall and/or between the seal and the inner wall of the first pressure chamber 41. Analogously, in case of a secondary seal leakage B, a leakage occurs between second piston 52 and a seal at the inner wall and/or between the seal and the inner wall of the second pressure chamber 51. In case of an inlet check valve leakage C fluent leaks back from the first fluent path section 3a towards the inlet. In case of an outlet check valve leakage D fluent leaks back from the second fluent path section 3b towards the first fluent path section 3a. Furthermore, a flow path blockage E may occur, for example the second unidirectional valve 35 or the fluid path from an inlet of the first chamber 41 to the outlet 39 of the pump is blocked or is obstructed by debris. Also it may be the case that a pressure deviation F and/or a pressure ripple G occurs for example because of the second unidirectional valve 35 is partially blocked.

As noted above a proper operation of the controlled liquid chromatography pump unit 1 is essential to enable reliable chromatography measurements. For this purpose it is important that a failure can be rapidly identified, diagnosed and that the controlled liquid chromatography pump unit can be repaired, preferably by local personnel, so that inactivity is minimized. This is achieved in that the controlled liquid chromatography pump unit 1 has an auto-diagnostic facility including the trained neural network processor 7. In the embodiment shown, the trained neural network processor 7 comprises a respective output for issuing a respective diagnostic output signal 7a, 7b, 7c, 7d, 7e, 7f and 79, which each are indicative for the presence of the pump faults A-G referred to above. The output signals 7a-7g may be of a binary nature, e.g. indicating the diagnosed absence or presence of the corresponding pump fault. Alternatively the output signals may have a higher number of signal levels. For example the signal level may indicate the diagnosed probability or the severity of a fault with a value selected from a value range, wherein the minimum of the range signifies that absence of the fault is diagnosed and the maximum of the range signifies that it is highly likely that the fault is presence or that the fault is severe.

The presence of the trained neural network renders it possible to provide reliable diagnostics of the controlled liquid chromatography pump unit 1 even in the absence of flow sensors data. Therewith cost of material are modest. Whereas the trained neural network processor 7 in the first place issues a diagnostic output indicative of the nature of a fault, the diagnostic output may further comprise information to assist the local operator to efficiently repair the pump where possible, e.g. by specifying which parts need to be replaced, and which procedural steps are to be taken. If the local operator is not capable to handle a particular fault, the diagnostic information may provide information for a service team.

Of course, it is even more preferable if the occurrence of a pump fault can be avoided. In some embodiments the diagnostic output facilitates preventive maintenance. Therewith it can be avoided that operation of the pump has to be discontinued at an unfavorable point in time. For example the seal leakage A may be indicated as the amount of fluid leakage in mL/s. With such an output range, the auto-diagnostic facility may also be used for predictive maintenance, i.e. with the amount of fluid leakage and the increase of this amount over time, a proper time for replacement of the piston seal may be suggested. In the example shown, a further output is provided with signal 7o, with which it can be explicitly indicated if the diagnosis reveals that no fault was detected at all. By way of example the signals 7a - 7g, 7o may be provided to drive a respective LED indicator at a housing of the controlled liquid chromatography pump unit 1. It is not necessary that the trained neural network processor 7 is permanently active. Maintenance personnel or an operator of the controlled liquid chromatography pump unit 1 may for example deliberately activate the trained neural network processor 7, e.g. by a control button 74 in case a diagnosis is requested. Whereas in this example respective outputs are provided that each provide a diagnostic output signal 7a-7g, 7o, it is alternatively possible that the trained neural network processor 7 is trained to provide a single diagnostic output signal having respective signal levels, each indicative for a particular type of fault.

As observed above, the one or more diagnostic output signals may be indicative for a need of maintenance to avoid an expected occurrence of a pump fault in the (near) future. In this way it can be avoided that the pump fault actually does occur by a timely maintenance. The pump can continue to function within specifications and its operation has to be interrupted only during the execution of the maintenance.

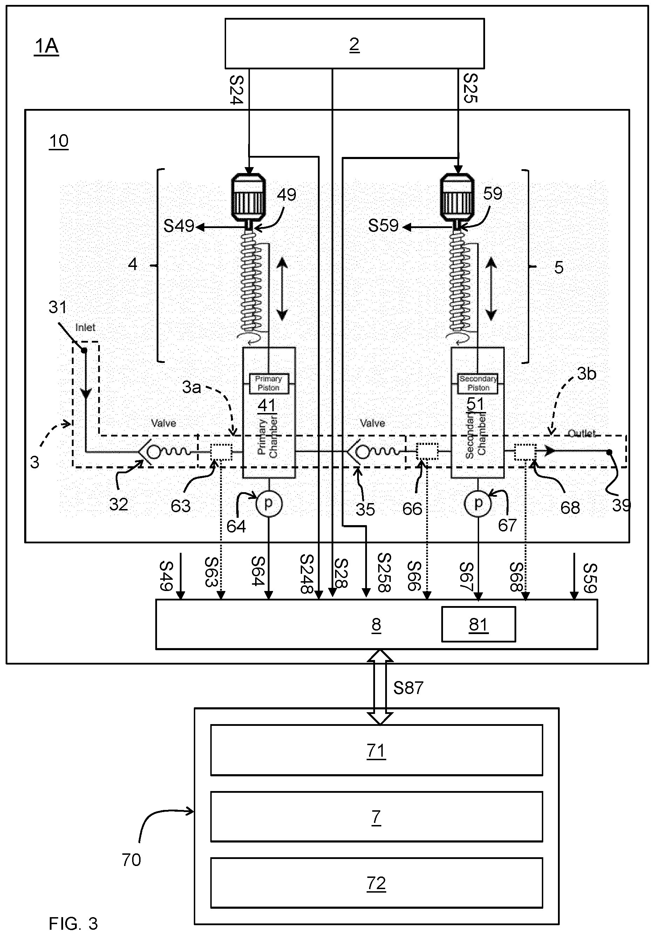

It is not necessary that a diagnostic facility is integrated in the controlled liquid chromatography pump unit. FIG. 3 shows an alternative embodiment, wherein the controlled liquid chromatography pump unit 1A is part of a system that further includes a separate diagnostic unit 70. In FIG. 3, elements corresponding to those in FIG. 1 have the same reference. In the example of FIG. 3 the trained neural network processor 7 is replaced with a pump interface 8. The trained neural network processor 7 is incorporated in the separate diagnostic unit 70 which in addition comprises a diagnostic unit interface 71. Furthermore in the example shown, it comprises a display unit 72. This embodiment enables a further cost reduction of the controlled liquid chromatography pump unit 1.

Whereas FIG. 3 shows a single pair of a controlled liquid chromatography pump unit 1A and a diagnostic unit 70, in practice, the diagnostic unit 70 may be used for diagnosis of a plurality of controlled liquid chromatography pump units 1A. In practice, a controlled liquid chromatography pump unit may operate normally for a long time and it suffices to provide a diagnosis only from time to time, e.g. on a regular basis or upon request. By using therewith a common diagnostic unit 70 the costs of material can be substantially reduced. The double-sided block arrow S87 represents a communication between the pump interface 8 and the diagnostic unit interface 71. The communication typically involves a transmission of the combination of input signals comprising the one or more sensor signals, e.g. S49, S59, S64, and S67 as well as the one or more signals from the pump controller 2. In this case the signals from the pump controller 2 transmitted by the pump interface 8 comprise a signal S28 indicative for the controller state as well as signals S248, S258 indicative for the supplied one or more pump control signals S24, S25. In other examples the signals from the pump controller 2 to the pump interface 8 may comprise a selection of these signals, e.g. only the signal S28 indicative for the controller state or one or more signals S248, S258 indicative for the supplied one or more pump control signals S24, S25. The diagnostic unit interface 71 may also transmit signals to the pump interface 8 for control purposes, e.g. to request a specific selection of the sensor data or data from the pump controller 2. In the exemplary embodiment shown, the pump interface 8 has a storage unit 81 for recording one or more of the combination of input signals S63, S64, S67, S68, S248, S258, S28 during a period of time. When, in a diagnostic session the diagnostic unit 70 is communicatively coupled to the controlled liquid chromatography pump unit 1A, the stored signals may be transmitted as input for the trained neural network processor 7. Therewith the time for gathering sufficient input data for the trained neural network processor 7 of the diagnostic unit 70 in order to properly diagnose the controlled liquid chromatography pump unit 1 can be reduced. In the diagnostic session the diagnostic unit 70 may transmit control signals to the pump interface 8 to request signal data from the storage unit 81 for a specific period of time. As noted above, communication between the pump interface 8 and the diagnostic unit interface 71 may take place in any of a variety of ways, e.g. wired, wireless, using a private or a public network and the like.

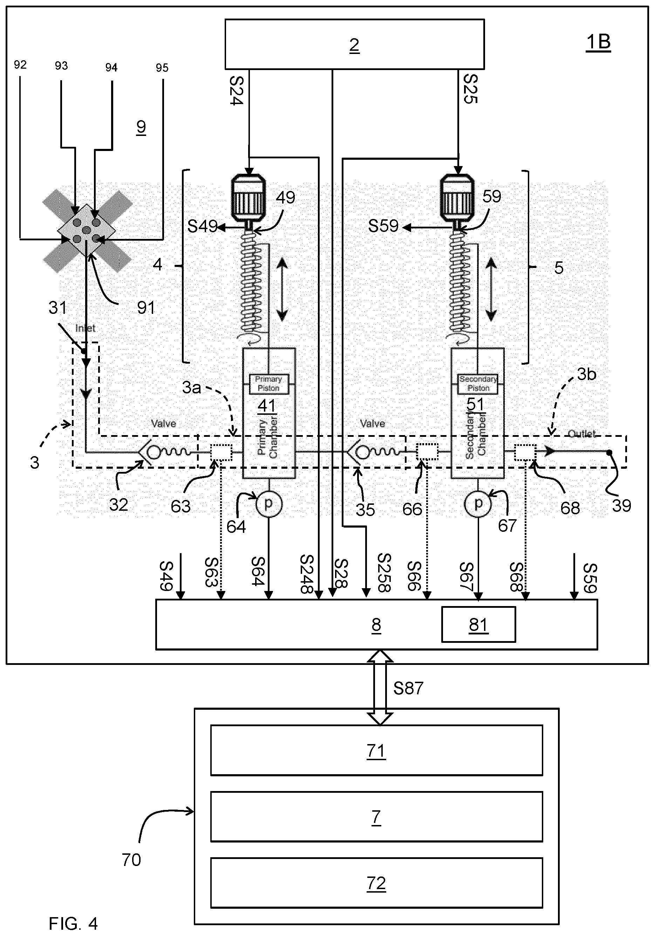

FIG. 4 shows an alternative controlled liquid chromatography pump unit 1B in a system with a diagnostic unit 70. In this example, the controlled liquid chromatography pump unit 1B comprises in addition to the elements shown in FIG. 2 a section 9 of the pump that comprises a quaternary selection or proportioning valve 91 having an output coupled to the inlet 31 of the fluid path 3 and having a first, a second, a third and a fourth fluid input 92, 93, 94, 95.

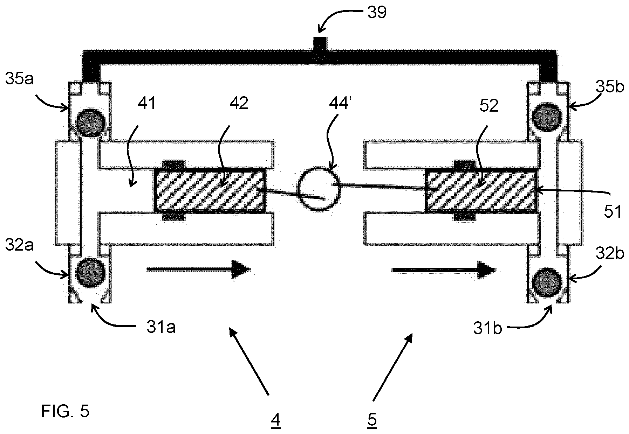

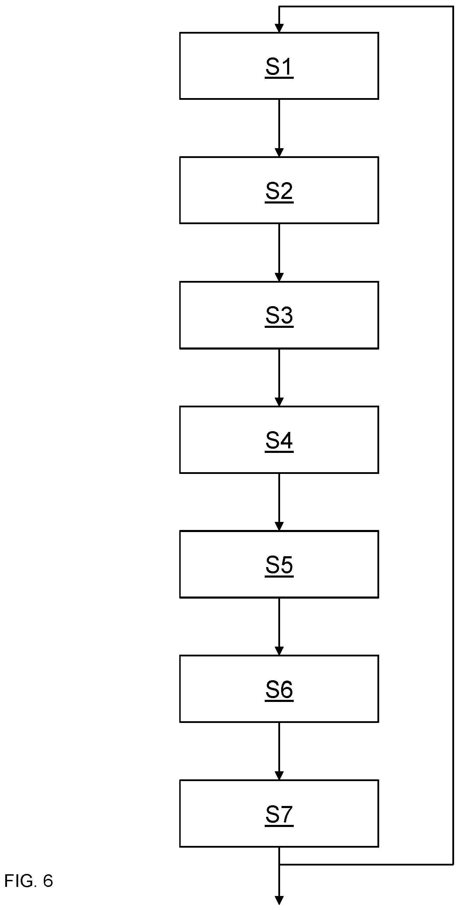

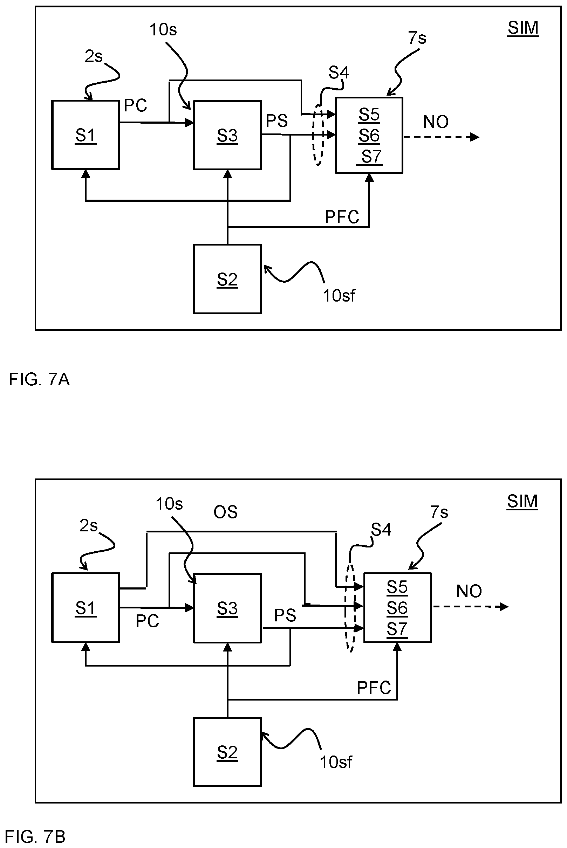

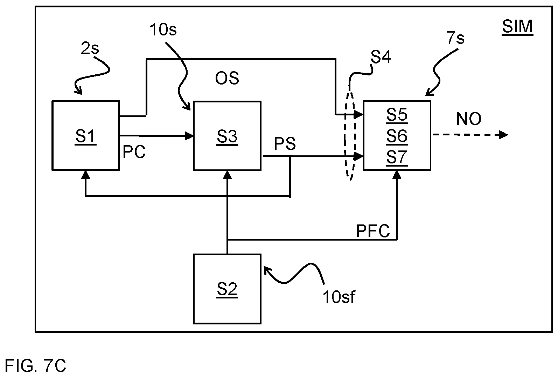

In the examples described with reference to FIGs 1-4, the controlled liquid chromatography pump unit 1 comprises an arrangement of a first pump section 4 and a second pump section 5 that are arranged in series along a fluid path 3. However, also other arrangements are possible. For example, FIG. 5 shows an alternative embodiment, wherein pump sections 4, 5 are arranged in parallel. The first pump section 4 pumps fluid from a first inlet 31a using a first piston 42 in first pressure chamber 41 having unidirectional valves 32a, 35a. The second pump section 5 pumps fluid from a second inlet 31b using a second piston 52 in second pressure chamber 51 having unidirectional valves 32b, 35b. The pump sections 4, 5 supply the pumped fluid to a common outlet 39. The pistons 42, 52 are driven in counterphase by a pump motor 44', so that a constant flow is delivered at the common outlet 39. While one of the pump sections 4, 5 fills its pressure chamber with fluid from its inlet, the other one of the pump sections 4, 5 supplies fluid from its pressure chamber to the outlet and reversely. In the example show the pump sections 4, 5 share a common motor 44'. Alternatively, embodiments may be contemplated wherein the pump sections each have a proper motor as long as they drive their respective pump section in counter phase to provide for a constant flow of fluid. FIG. 6, 7A, 7B and 7C schematically show a method of training a neural network processor for providing diagnostic information of a controlled liquid chromatography pump unit comprising an execution of the following sequence of steps S1-S7 as shown in FIG. 6 and as further illustrated for three embodiments in FIG. 7A, 7B and 7C. The drawings in FIG. 7A, 7B, 7C cluster wise represent these steps for illustration purpose. In a practical embodiment of the method, the steps of the method may indeed be performed by mutually different computation devices, but that is not necessary. Instead, the various simulations and computations in this sequence of steps may be performed on a single computation device, e.g. a on general purpose processor.

Neural networks are trained, using a large set of measurements of pumps operating under normal conditions and with faults such as primary seal leakage, secondary seal leakage B and others. For new pumps, pumps that have been brought to the market recently, such data sets are generally not available. In this disclosure these data sets are generated using simulations.

In a step S1 a pump controller (e.g. the pump controller 2 of FIG. 1-4) is simulated that generates one or more pump control signals PC in accordance with a pump controller state.

In step S2 a pump fault simulation signal PFC is simulated that is representative for the presence or absence of a pump fault, for example one of the pump faults A-G as discussed with reference to FIG. 1A.

In step S3 a simulation model of a pump unit is executed. The simulation model simulates the operation of the pump unit (e.g. the pump unit 3,4,5 in FIG. 1-4 or alternative embodiments thereof as shown in FIG. 5 for example). The simulation model therewith is configured to simulate the operation of the pump in a condition determined by the pump fault simulation signal PFC, in accordance with the pump controller drive signals and controller state and to provide simulated sensor signals representing operational parameters PS that would be obtained from the sensors of the pump unit 3,4,5 operating in that condition.

Step S 1, Step S2 and Step S3 may be sequentially simulated in time instances where the S 1 and S2 form the input of S3. The simulated sensor signals and/or other variables of S3 may be fed back into S1 and S2 after which the next sequence starts.

In step S4 a combination of input signals comprising the one or more simulated sensor signals PS is supplied to the neural network processor. The combination of input signals further comprises one or more signals OS indicative for the pump controller state and/or one or more signals indicative for the supplied one or more simulated pump control signals PC. In the example shown in FIG. 7A, the one or more simulated pump control signals PC are supplied to the neural network processor in combination with the simulated sensor signals PS. In the example of FIG. 7B, both the one or more signals OS indicative for the pump controller state and the one or more signals indicative for the supplied one or more simulated pump control signals PC are supplied to the neural network processor in combination with the simulated sensor signals PS. In the example of FIG. 7C, only the one or more signals OS indicative for the pump controller state are supplied to the neural network processor in combination with the simulated sensor signals PS.

In step S5, the neural network processor computes one or more output signals NO in response to the supplied combination of input signals. The combination of input signals comprises at least the one or more simulated sensor signals. In addition the combination of input signals comprises either the one or more signals OS indicative for the pump controller state or the one or more simulated pump control signals PC or the pump controller state signals OS and the simulated pump control signals PC. As noted the neural network processor to be trained may be either a separate computational unit, or may be part of a common computational unit. The one or more output signals NO are a tentative diagnostic indication for the condition of the simulated controlled liquid chromatography pump unit. During the execution of the training method the quality of the output signals as a diagnostic indication gradually improves.

In step S6 a loss function is computed by comparison of a diagnostic state as indicated by the one or more output signals NO and a diagnostic state as indicated by the pump fault simulation signal PFC.

In step S7 the neural network processor is trained by feeding back a loss computed with the loss function. This can for example be achieved by a back propagation computation.

The steps S1-S7 can be repeated one or more times for various conditions indicated by the pump fault simulation signal PFC. Typically for each condition indicated by the pump fault simulation signal the sequence of steps is performed a plurality of times, therewith introducing noise in the input signals of the neural network processor to avoid over fitting. Also the repetitions will typically include a plurality of sequences for the case that the pump fault simulation signal PFC indicates the absence of a pump fault. The repetitions for a pump fault simulation signal PFC indicating a particular pump fault, combination of pump faults or absence of pump faults do not need to immediately succeed each other, but simulations for various conditions may be alternated.

The method can be discontinued once it is known, or can be assumed that the neural network processor is sufficiently trained to function as a trained neural network processor 7 in a controlled liquid chromatography pump unit 1 with auto-diagnostic facility, as shown in FIG. 1, 2, or in a diagnostic unit 70 for use in a system with a controlled liquid chromatography pump unit that does not require its own diagnostic facility, for example see 1A, 1B in FIG. 3, and 4. Upon detecting that the loss computed in step S6 is sufficiently low, it is ascertained that the neural network processor is sufficiently trained for this purpose. Alternatively, it may be presumed that the neural network processor is sufficiently trained if the sequence of steps S1-S7 was repeated for at least a predetermined minimum number of times for each condition to be detected. In case the neural network processor is considered to be sufficiently trained its parameters can be frozen. In this state the neural network processor is named the trained neural network processor. If desired the trained neural network processor can be cloned for example to have a respective trained neural network processor 7 available for auto-diagnostic purposes in a controlled liquid chromatography pump unit 1 as shown in FIG. 1, and 2, or to be incorporated in respective diagnostic units 70 for use in a system as shown in FIG. 3 or 4. Alternatively, it may be contemplated to directly use the trained neural network processor 7 obtained with the method of FIG. 6 and 7A, 7B or 7C. It may even be the case that a general purpose computation unit which is used for performing the method of FIG. 6 and 7A, 7B or 7C is also used to execute the trained neural network processor 7 on the general purpose computation unit. For example a remote service may have a diagnostic unit interface 71 to enable the trained neural network processor 7 on the general purpose computation unit to receive the combination of input signals from a client as shown in FIG. 3 and 4 respectively.

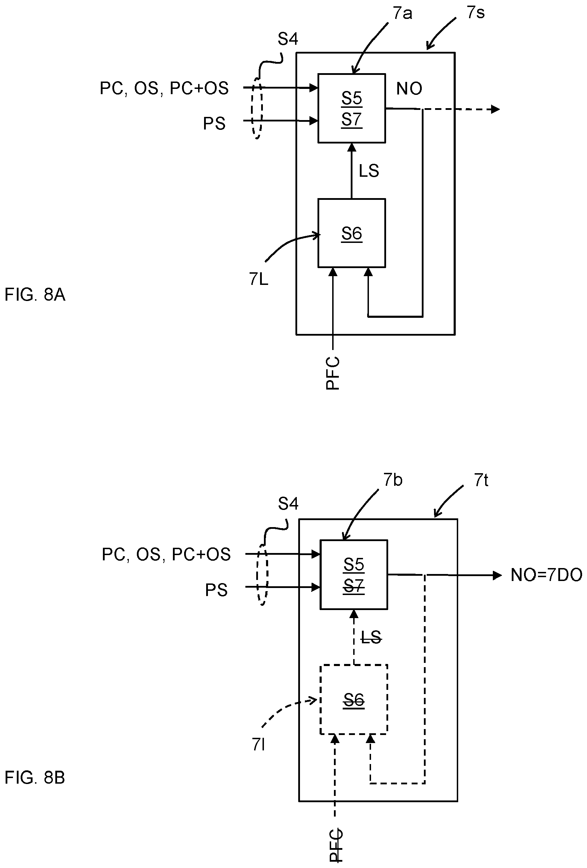

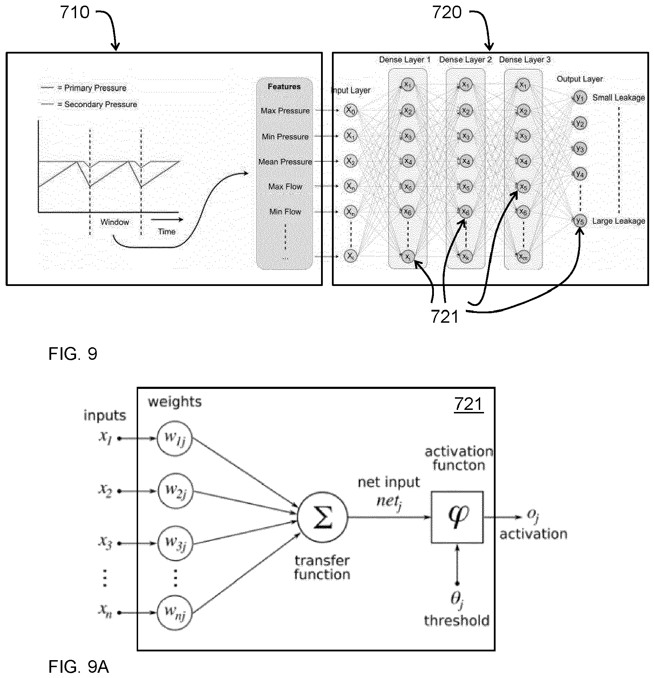

FIG. 8A shows an exemplary neural network processor module 7s as employed in FIG. 7A, 7B, 7C in more detail. As shown therein the exemplary neural network processor module 7s comprises a trainable neural network 7a that receives a combination of input signals comprising at least the simulated sensor signals PS and furthermore at least one of simulated pump control signals PC and signals OS indicative for an operational state in the pump controller simulation module 2s. In response thereto, the trainable neural network processor 7A computes S5 an output signal NO which is a tentative diagnostic signal indicative for the fault which is being simulated as specified by the pump fault simulation signal PFC. As indicated in FIG. 9A by the dashed arrow, the output signal NO cannot yet be used for actual diagnostic purposes. However, the output signal NO is provided to a loss computation unit 71 that compares the tentative diagnosis indicated by the signal NO with a Ground Truth for the diagnosis, as specified by the pump fault simulation signal PFC and in response thereto computes S6 a loss signal LS, that is indicative for a magnitude of the deviation between the tentative diagnosis and the Ground Truth. In step S7, the loss signal LS is used to train the trainable neural network processor 7a. This for example achieved by back propagation.

After a sufficient number of cycles a trained neural network processor 7b is obtained as shown in FIG. 8B. In this stage the loss computation unit 71 is no longer required, and the trained neural network processor 7b is fit for use in a diagnostic module of a controlled liquid chromatography pump unit 1 with auto-diagnostic facility or for use as a separate diagnostic unit in a system with one or more controlled liquid chromatography pump units 1.

In one exemplary embodiment, as shown in FIG. 9, the neural network processor used is a Multilayer Perceptron (MLP) 720 cooperating with a feature extraction component 710 that preprocesses the combination of input signals. The feature extraction component 710 for example computes the following signals. In response to a primary pressure signal S64 from pressure sensor 64 it computes a minimum value, a mean value and a maximum value for the pressure indicated by the signal S64 during a time window. Similarly, it computes a minimum value, a mean value and a maximum value for the pressure indicated by the signal S67 during a time window. In the embodiment shown it computes similar statistical data for the encoder signals S49, S59, indicative for the position of the pistons. It may further compute similar statistical data for a flow in case flow sensors 63, 66, 68 are provided. In the example of FIG. 9, the Multilayer Perceptron (MLP) 720 comprises an input layer to receive the preprocessed signals, a first, a second and a third dense layer and an output layer. FIG. 9A schematically shows an example of a neural network computation element 721. It comprises a transfer function which adds the weighted inputs x1,...,xn and supplies the weighted sum so obtained to a non-linear activation function, here a threshold function is used which issues a binary 1 if the weighted sum exceeds a threshold and a binary 0 otherwise. The MLP 720 was trained with an Adam optimizer using default parameters (learning rate = 0.001, beta 1 = 0.9, beta 2 = 0.999 and no AMSGrad).

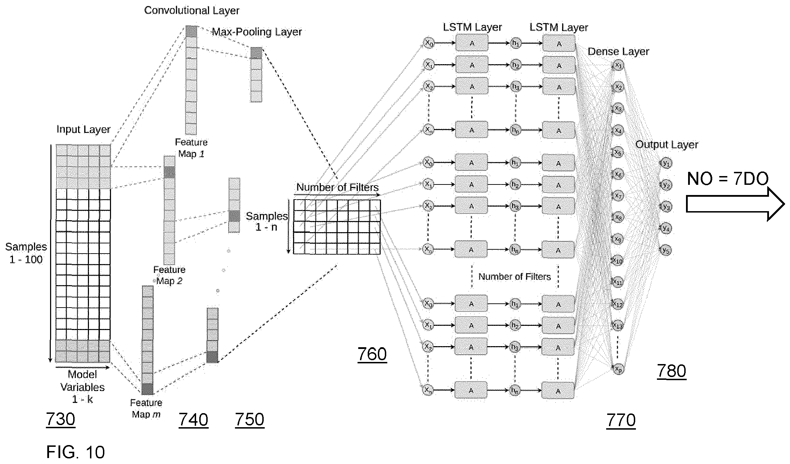

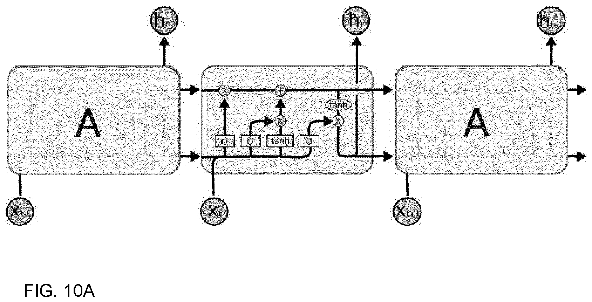

FIG. 10 shows a second exemplary embodiment wherein the neural network processor 7 which comprises amongst others a combination of Convolutional Neural Networks (CNN) 740 and a pair 760 of Long Short-Term Memory (LSTM) layers. In the example shown in FIG. 10, the inputs of the input layer 730 comprise recordings of the sensors signals and the pump controller signals. In this example 100 samples at mutually subsequent points in time during a time window are obtained of each input signal). CNN's 740 are used to abstract the inputs into "features" stored in the feature maps 1,2, ...m to therewith provide a more dense representation of the original input signals. A Max-Pooling layer 750 is employed to provide these features as an input for the plurality of filters formed by LSTM layers 760. LSTM layers, unlike standard feedforward neural networks, have feedback loops, which make them more suited to translate the feature sets into the specific faults in an UHPLC pump. The outputs of the LSTM layers 760 is provided to a dense layer 770 and an output layer 780 to compute the diagnostic output NO (7DO).

An example of an LSTM can be seen in FIG. 10A. Compared with standard region based neural networks (RNNs), LSTMs are capable of learning long-term dependencies. In the example of FIG. 10A, this is achieved by using four interacting neural network layers (σ, σ, tanh and σ) instead of only one layer. The four interacting neural network layers together determine what input information should be kept and how much it should contribute to the output. The exemplary LSTM shown in FIG. 10A further has three inputs (Xₜ₋₁, Xₜ, Xₜ₊₁), three outputs (hₜ₋₁, hₜ, hₜ₊₁) and multiple LSTM cells A. More specifics are described in Christopher Olah, ed. (2019), "Understanding LSTM Networks", https://colah.github.io/
posts/2015-08-Understanding-LSTMs/.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

## Claims

1. A method of training a neural network processor (7) for providing diagnostic information of a controlled liquid chromatography pump unit comprising an execution of the following sequence of steps:
a) simulating (S1) a pump controller generating one or more pump control signals (PC) in accordance with a pump controller state;
b) simulating (S2) a pump fault simulation signal (PFC) representative for the presence or absence of a pump fault;
c) executing (S3) a simulation model of a pump unit, the simulation model providing one or more simulated sensor signals (PS) representing operational parameters of the simulated pump unit in response to the one or more simulated pump control signals (PC), the simulation model selectively simulating a pump fault in response to the pump fault simulation signal (PFC);
d) supplying (S4) the neural network processor with a combination of input signals comprising the one or more simulated sensor signals (PS) and one or more signals (OS) indicative for said pump controller state and/or one or more signals indicative for the supplied one or more simulated pump control signals (PC);
e) the neural network processor computing (S5) one or more output signals (NO) in response to the supplied combination of input signals (PS, OS; PC, OS, PS; PC, PS);
f) computing (S6) a loss function by comparison of a diagnostic state as indicated by the one or more output signals (NO) and a diagnostic state as indicated by the pump fault simulation signal (PFC);
g) training the neural network processor by feeding back (S7) a loss (LS) computed with the loss function, wherein during one or more executed sequences the pump fault simulation signal (PFC) indicates that a predetermined pump fault is to be simulated and during one or more executed sequences the pump fault simulation signal (PFC) indicates that the predetermined pump fault is to be absent in the simulation.

2. The method according to claim 1, wherein the neural network processor (7) to be trained comprises a combination of a set of Convolutional Neural Networks (CNN) (740) and a pair (760) of Long Short-Term Memory (LSTM) layers.

3. A method of manufacturing a controlled liquid chromatography pump unit (1) having an auto-diagnostic facility, therewith assembling a liquid chromatography pump (10) with a pump controller (2), at least one sensor (63, 64, 66, 67, 68) and a trained neural network processor (7) obtained with the method of claim 1, therewith:
- connecting the liquid chromatography pump (10) to control outputs of the controller (2) for providing control signals (S24, S25) to the liquid chromatography pump;
- assembling the at least one sensor (49, 59, 64, 67) with a sensor output for providing a sense signal (S49, S59, S64, S67) indicative for an operational characteristic of the pump;
- connecting the trained neural network processor (7) to one or more of the control outputs of the pump controller (2) and to the sensor output of the at least one sensor (49, 59, 64, 67).

4. A method of using a controlled liquid chromatography pump unit (1), comprising manufacturing the controlled liquid chromatography pump unit (1) with the method of claim 3 and subsequently performing the following steps:
- the pump controller (2) providing control signals (S24, S25) to the liquid chromatography pump;
- the trained neural network processor (7) receiving respective one or more control signals (S247, S257) from the one or more of the control outputs of the pump controller (2) and receiving the sense signal (S49, S59, S64, S67,) from the output of the at least one sensor (49, 59, 64, 67) and in response thereto providing one or more diagnostic output signals (7DO).

5. A method of manufacturing a system comprising a controlled liquid chromatography pump unit (1) and a diagnostic unit (70), the method comprising assembling a liquid chromatography pump (10) with a pump controller (2) and at least one sensor (63, 64, 66, 67), therewith:
- connecting the liquid chromatography pump (10) to control outputs of the controller (2) for providing control signals (S24, S25) to the liquid chromatography pump;
- assembling the at least one sensor (49, 59, 64, 67) with a sensor output for providing a sense signal (S49, S59, S64, S67) indicative for an operational characteristic of the pump (10);
- providing the controlled liquid chromatography pump unit (1) with a pump interface (8) coupled to the pump controller (2) and to the at least one sensor (49, 59, 64, 67);
- providing the diagnostic unit (70) with the trained neural network processor (7) obtained with the method of claim 1, and with a diagnostic unit interface (71) to allow inputs of the trained neural network processor (7) to receive one or more control signals (S247, S257) of the pump controller (3) and the sense signal (S49, S59, S64, S67) of the at least one sensor (49, 59, 64, 67) from the pump interface (8).

6. A method of using a system comprising a controlled liquid chromatography pump unit (1) and a diagnostic unit (70), the method comprising manufacturing the system according to the method of claim 5 and subsequently performing the following steps:
- the pump controller (2) providing control signals (S24, S25) to the liquid chromatography pump (3, 4, 41, 5, 51);
- of the diagnostic unit (70) allowing inputs of the trained neural network processor (7) to receive one or more control signals (S247, S257) of the pump controller and the sense signal (S49, S59, S64, S67) of the at least one sensor (49, 59, 6467) obtained by the diagnostic unit interface (71) from the pump interface (8);
the trained neural network processor (7) in response thereto providing one or more diagnostic output signals.

7. The method of claim 6, where the pump interface (8) buffers one or more control signals (S247, S257) of the pump controller and the sense signal (S49, S59, S64, S67) of the at least one sensor (49, 59, 64, 67) during a first period of time and transfers said buffered signals to the diagnostic unit interface (71) in a second period of time succeeding said first period of time.

8. The method of claim 6 or 7, wherein the one or more diagnostic output signals are indicative for a need of maintenance to avoid an expected occurrence of a pump fault in the (near) future.

## Patentansprüche

1. Verfahren zum Trainieren eines Prozessors (7) eines neuronalen Netzes zum Bereitstellen von Diagnoseinformationen einer gesteuerten Flüssigchromatographiepumpeneinheit, das eine Ausführung der nachstehenden Folge von Schritten umfasst:
a) Simulieren (S1) einer Pumpensteuervorrichtung, die ein oder mehrere Pumpensteuersignale (PC) gemäß einem Pumpensteuervorrichtungszustand erzeugt;
b) Simulieren (S2) eines Pumpenfehlersimulationssignals (PFC), das für das Vorhandensein oder Fehlen eines Pumpenfehlers repräsentativ ist;
c) Ausführen (S3) eines Simulationsmodells einer Pumpeneinheit, wobei das Simulationsmodell ein oder mehrere simulierte Sensorsignale (PS), die Betriebsparameter der simulierten Pumpeneinheit als Reaktion auf das eine oder die mehreren simulierten Pumpensteuersignale (PC) darstellen, bereitstellt, wobei das Simulationsmodell selektiv einen Pumpenfehler als Reaktion auf das Pumpenfehlersimulationssignal (PFC) simuliert;
d) Versehen (S4) des Prozessors des neuronalen Netzes mit einer Kombination aus Eingangssignalen, die das eine oder die mehreren simulierten Sensorsignale (PS) und ein oder mehrere Signale (OS) umfassen, die den Pumpensteuervorrichtungszustand angeben, und/oder ein oder mehrere Signale, die das gelieferte eine oder mehrere simulierte Pumpensteuersignale (PC) angeben;
e) wobei der Prozessor des neuronalen Netzes ein oder mehrere Ausgangssignale (NO ) als Reaktion auf die gelieferte Kombination aus Eingangssignalen (PS, OS; PC, OS, PS; PC, PS) berechnet (S5);
f) Berechnen (S6) einer Verlustfunktion durch Vergleich eines Diagnosezustands, wie er von dem einen oder mehreren Ausgangssignalen (NO) angegeben wird, und eines Diagnosezustands, wie er von dem Pumpenfehlersimulationssignal (PFC) angegeben wird;
g) Trainieren des Prozessors des neuronalen Netzes durch Rückkoppeln (S7) eines Verlusts (LS), der mit der Verlustfunktion berechnet wird, wobei während einer oder mehrerer ausgeführter Folgen das Pumpenfehlersimulationssignal (PFC) angibt, dass ein vorbestimmter Pumpenfehler simuliert werden soll, und während einer oder mehreren ausgeführten Folgen das Pumpenfehlersimulationssignal (PFC) angibt, dass der vorbestimmte Pumpenfehler in der Simulation fehlen soll.

2. Verfahren nach Anspruch 1, wobei der zu trainierende Prozessor (7) des neuronalen Netzes eine Kombination aus einem Satz von neuronalen Faltungsnetzen (CNN) (740) und einem Paar (760) Long Short-Term-Memory-Schichten (LSTM-Schichten) umfasst.

3. Verfahren zum Herstellen einer gesteuerten Flüssigchromatographiepumpeneinheit (1), die eine Selbstdiagnosefunktion aufweist, Zusammenfügen damit einer Flüssigchromatographiepumpe (10) mit einer Pumpensteuervorrichtung (2), mindestens einem Sensor (63, 64, 66, 67, 68) und einem trainierten Prozessor (7) des neuronalen Netzes, der mit dem Verfahren nach Anspruch 1 erhalten wird, damit:
- Verbinden der Flüssigchromatographiepumpe (10) zum Steuern von Ausgängen der Steuervorrichtung (2) zum Bereitstellen von Steuersignalen (S24, S25) zu der Flüssigchromatographiepumpe;
- Zusammenfügen des mindestens einen Sensors (49, 59, 64, 67) mit einem Sensorausgang zum Bereitstellen eines Abtastsignals (S49, S59, S64, S67), das ein Betriebsmerkmal der Pumpe angibt;
- Verbinden des trainierten Prozessors (7) des neuronalen Netzes mit einem oder mehreren Steuerausgängen der Pumpensteuervorrichtung (2) und dem Sensorausgang des mindestens einen Sensors (49, 59, 64, 67).

4. Verfahren zum Verwenden einer gesteuerten Flüssigchromatographiepumpeneinheit (1), das das Herstellen der gesteuerten Flüssigchromatographiepumpeneinheit (1) mit dem Verfahren nach Anspruch 3 und anschließend das Durchführen der folgenden Schritte umfasst:
- Bereitstellen der Steuersignale (S24, S25) an die Flüssigchromatographiepumpe durch die Pumpensteuervorrichtung (2);
- Empfangen des jeweiligen einen oder der mehreren Steuersignale (S247, S257) von dem einen oder den mehreren Steuerausgängen der Pumpensteuervorrichtung (2) durch den trainierten Prozessor (7) des neuronalen Netzes, und Empfangen des Abtastsignals (S49, S59, S64, S67) von dem Ausgang des mindestens einen Sensors (49, 59, 64, 67), und als Reaktion darauf, Bereitstellen eines oder mehrerer Diagnoseausgangssignale (7DO).

5. Verfahren zum Herstellen eines Systems, das eine gesteuerte Flüssigchromatographiepumpeneinheit (1) und eine Diagnoseeinheit (70) umfasst, wobei das Verfahren das Zusammenfügen einer Flüssigchromatographiepumpe (10) mit einer Pumpensteuervorrichtung (2) und mindestens einem Sensor (63, 64, 66, 67) umfasst, damit:
- Verbinden der Flüssigchromatographiepumpe (10) zum Steuern von Ausgängen der Steuervorrichtung (2) zum Bereitstellen von Steuersignalen (S24, S25) zu der Flüssigchromatographiepumpe;
- Zusammenfügen des mindestens einen Sensors (49, 59, 64, 67) mit einem Sensorausgang zum Bereitstellen eines Abtastsignals (S49, S59, S64, S67), das ein Betriebsmerkmal der Pumpe (10) angibt;
- Versehen der gesteuerten Flüssigchromatographiepumpeneinheit (1) mit einer Pumpenschnittstelle (8), die mit der Pumpensteuervorrichtung (2) und mit dem mindestens einen Sensor (49, 59, 64, 67) gekoppelt ist;
- Versehen der Diagnoseeinheit (70) mit einem trainierten Prozessor (7) des neuronalen Netzes, der mit dem Verfahren nach Anspruch 1 erhalten wird, und mit einer Diagnoseeinheitsschnittstelle (71), um Eingaben des trainierten Prozessors (7) des neuronalen Netzes zu erlauben, um ein oder mehrere Steuersignale (S247, S257) der Pumpensteuereinheit (3) und das Abtastsignal (S49, S59, S64, S67) des mindestens einen Sensors (49, 59, 64, 67) von der Pumpenschnittstelle (8) zu empfangen.

6. Verfahren zum Verwenden ein Systems, das eine gesteuerte Flüssigchromatographiepumpeneinheit (1) und eine Diagnoseeinheit (70) umfasst, wobei das Verfahren das Herstellen des Systems nach dem Verfahren des Anspruchs 5 und anschließend das Durchführen der folgenden Schritte umfasst:
- die Pumpensteuervorrichtung (2) stellt Steuersignale (S24, S25) an die Flüssigchromatographiepumpe (3, 4, 41, 5, 51) bereit;
- die Diagnoseeinheit (70) erlaubt Eingaben des trainierten Prozessors (7) des neuronalen Netzes, um ein oder mehrere Steuersignale (S247, S257) der Pumpensteuereinheit und das Abtastsignal (S49, S59, S64, S67) des mindestens einen Sensors (49, 59, 64, 67), der durch die Diagnoseeinheitsschnittstelle (71) von der Pumpenschnittstelle (8) erhalten wird, zu empfangen;
- wobei der trainierte Prozessor (7) des neuronalen Netzes als Reaktion darauf ein oder mehrere Diagnoseausgangssignale bereitstellt.

7. Verfahren nach Anspruch 6, wobei die Pumpenschnittstelle (8) ein oder mehrere Steuersignale (S247, S257) der Steuereinheit und das Abtastsignal (S49, S59, S64, S67) des mindestens einen Sensors (49, 59, 64, 67) während der ersten Zeitspanne zwischenspeichert, und die zwischengespeicherten Signale an die Diagnoseeinheitschnittstelle (71) in einer zweiten Zeitspanne, die auf die erste Zeitspanne folgt, überträgt.

8. Verfahren nach Anspruch 6 oder 7, wobei das eine oder die mehreren Diagnoseausgangssignale einen Wartungsbedarf angeben, um das erwartete Auftreten eines Pumpenfehlers in der (nahen) Zukunft zu vermeiden.

## Revendications

1. Procédé de formation d'un processeur de réseau neuronal (7) permettant de fournir des informations de diagnostic d'une unité de pompe de chromatographie liquide contrôlée comprenant une exécution de la séquence d'étapes suivante :
a) simulation (S1) d'un contrôleur de pompe générant un ou plusieurs signaux de contrôle de pompe (PC) selon un état de contrôleur de pompe ;
b) simulation (S2) d'un signal de simulation de défaut de pompe (PFC) représentatif de la présence ou de l'absence d'un défaut de pompe ;
c) exécution (S3) d'un modèle de simulation d'une unité de pompe, le modèle de simulation fournissant un ou plusieurs signaux de capteur simulés (PS) représentant des paramètres opérationnels de l'unité de pompe simulée en réponse aux un ou plusieurs signaux de contrôle de pompe (PC) simulés, le modèle de simulation simulant sélectivement un défaut de pompe en réponse au signal de simulation de défaut de pompe (PFC) ;
d) fourniture (S4) du processeur de réseau neuronal avec une combinaison de signaux d'entrée comprenant les un ou plusieurs signaux de capteur simulés (PS) et un ou plusieurs signaux (OS) indicatifs de l'état de contrôleur de ladite pompe et/ou un ou plusieurs signaux indicatifs des un ou plusieurs signaux de contrôle de pompe (PC) simulés fournis ;
e) calcul (S5) par le processeur de réseau neuronal d'un ou plusieurs signaux de sortie (NO) en réponse à la combinaison fournie de signaux d'entrée (PS, OS ; PC, OS, PS ; PC, PS) ;
f) calcul (S6) d'une fonction de perte par comparaison d'un état de diagnostic tel qu'indiqué par les un ou plusieurs signaux de sortie (NO) et d'un état de diagnostic tel qu'indiqué par le signal de simulation de défaut de pompe (PFC) ;
g) formation du processeur de réseau neuronal par rétroaction (S7) d'une perte (LS) calculée avec la fonction de perte, dans lequel au cours d'une ou plusieurs séquences exécutées, le signal de simulation de défaut de pompe (PFC) indique qu'un défaut de pompe prédéterminé doit être simulé et au cours d'une ou plusieurs séquences exécutées le signal de simulation de défaut de pompe (PFC) indique que le défaut de pompe prédéterminé doit être absent dans la simulation.

2. Procédé selon la revendication 1, dans lequel le processeur de réseau neuronal (7) devant être formé comprend une combinaison d'un ensemble de réseaux neuronaux convolutionnels (CNN) (740) et une paire (760) de couches de longue mémoire à court terme (Long Short-Term Memory - LSTM).

3. Procédé de fabrication d'une unité de pompe de chromatographie liquide contrôlée (1) ayant un équipement d'autodiagnostic, auquel est assemblé une pompe de chromatographie liquide (10) avec un contrôleur de pompe (2), au moins un capteur (63, 64, 66, 67, 68) et un processeur de réseau neuronal formé (7) obtenu avec le procédé selon la revendication 1, ceci permettant de :
- relier la pompe de chromatographie liquide (10) pour contrôler les sorties du contrôleur (2) pour fournir des signaux de contrôle (S24, S25) à la pompe de chromatographie liquide ;
- assembler l'au moins un capteur (49, 59, 64, 67) avec une sortie de capteur pour fournir un signal de détection (S49, S59, S64, S67) indicatif d'une caractéristique opérationnelle de la pompe ;
- relier le processeur de réseau neuronal formé (7) à une ou plusieurs des sorties de contrôle du contrôleur de pompe (2) et à la sortie de capteur de l'au moins un capteur (49, 59, 64, 67).

4. Procédé d'utilisation d'une unité de pompe de chromatographie liquide contrôlée (1), comprenant la fabrication de l'unité de pompe de chromatographie liquide contrôlée (1) avec le procédé selon la revendication 3 et par la suite la réalisation des étapes suivantes :
- la fourniture par le contrôleur de pompe (2) de signaux de contrôle (S24, S25) à la pompe de chromatographie liquide ;
- la réception par le processeur de réseau neuronal formé (7) d'un ou plusieurs signaux de contrôle (S247, S257) respectifs des une ou plusieurs sorties de contrôle du contrôleur de pompe (2) et la réception du signal de détection (S49, S59, S64, S67), depuis la sortie de l'au moins un capteur (49, 59, 64, 67) et en réponse à celles-ci la fourniture d'un ou plusieurs signaux de sortie de diagnostic (7DO).

5. Procédé de fabrication d'un système comprenant une unité de pompe de chromatographie liquide contrôlée (1) et une unité de diagnostic (70), le procédé comprenant l'assemblage d'une pompe de chromatographie liquide (10) avec un contrôleur de pompe (2) et au moins un capteur (63, 64, 66, 67), ceci permettant de :
- relier la pompe de chromatographie liquide (10) pour contrôler les sorties de contrôle du contrôleur (2) pour fournir des signaux de contrôle (S24, S25) à la pompe de chromatographie liquide ;
- assembler l'au moins un capteur (49, 59, 64, 67) avec une sortie de capteur pour fournir un signal de détection (S49, S59, S64, S67) indicatif d'une caractéristique opérationnelle de la pompe (10) ;
- fournir à l'unité de pompe de chromatographie liquide contrôlée (1) une interface de pompe (8) couplée au contrôleur de pompe (2) et à l'au moins un capteur (49, 59, 64, 67) ;
- fournir à l'unité de diagnostic (70) le processeur de réseau neuronal formé (7) obtenu avec le procédé selon la revendication 1, et une interface d'unité de diagnostic (71) pour permettre à des entrées du processeur de réseau neuronal formé (7) de recevoir un ou plusieurs signaux de contrôle (S247, S257) du contrôleur de pompe (3) et le signal de détection (S49, S59, S64, S67) de l'au moins un capteur (49, 59, 64, 67) de l'interface de pompe (8).

6. Procédé d'utilisation d'un système comprenant une unité de pompe de chromatographie liquide contrôlée (1) et une unité de diagnostic (70), le procédé comprenant la fabrication du système selon le procédé de la revendication 5 et la réalisation par la suite des étapes suivantes :
- la fourniture par le contrôleur de pompe (2) de signaux de contrôle (S24, S25) à la pompe de chromatographie liquide (3, 4, 41, 5, 51) ;
- la permission donnée par l'unité de diagnostic (70) à des entrées du processeur de réseau neuronal formé (7) de recevoir un ou plusieurs signaux de contrôle (S247, S257) du contrôleur de pompe et le signal de détection (S49, S59, S64, S67) de l'au moins un capteur (49, 59, 64, 67) obtenu par l'interface d'unité de diagnostic (71) de l'interface de pompe (8) ;
la fourniture par le processeur de réseau neuronal formé (7) en réponse à celles-ci d'un ou plusieurs signaux de sortie de diagnostic.

7. Procédé selon la revendication 6, où l'interface de pompe (8) met en mémoire tampon un ou plusieurs signaux de contrôle (S247, S257) du contrôleur de pompe et le signal de détection (S49, S59, S64, S67) de l'au moins un capteur (49, 59, 64, 67) au cours d'une première période de temps et transfère lesdits signaux mis en mémoire tampon à l'interface d'unité de diagnostic (71) dans une deuxième période de temps succédant à ladite première période de temps.

8. Procédé selon la revendication 6 ou 7, dans lequel les un ou plusieurs signaux de sortie de diagnostic sont indicatifs d'un besoin de maintenance pour éviter une occurrence attendue d'un défaut de pompe dans le futur (proche).
